# EUROPEAN PATENT APPLICATION

(11) **EP 3 961 434 A1**
(43) Date of publication of application: **02.03.2022**
(21) Application number: 20193207.6
(22) Date of filing: 27.08.2020
(51) Int. Cl.: G06F 16/9535

(54) **METHOD AND APPARATUS FOR CONCEPT MATCHING**

(71) Applicant: Samsung Electronics Co., Ltd., Gyeonggi-do 16677 (KR)
(72) Inventor: PAVLOVIC, Vladimir, Staines, TW18 4QE (GB); KIM, Minyoung, Staines, TW18 4QE (GB); GUERRERO, Ricardo, Staines, TW18 4QE (GB); PHAM, Hai Xuan, Staines, TW18 4QE (GB)
(74) Representative: Appleyard Lees IP LLP

(57) **Abstract**

Broadly speaking, the present techniques relate to methods, apparatuses and systems for searching based on one or more concepts represented by a user-input search query. In embodiments, the present application describes artificial intelligence based techniques for matching data items (such as images and text) which represent the same concept(s) as the input search query, without requiring human annotation of the data items.

## Description

### Field

The present application generally relates to a method and apparatus for searching, and in particular to machine learning techniques for matching data items (such as images and text) which represent the same concept, without requiring human annotation. Advantageously, this may enable humans to query a database using one type of data item (such as an image) and obtain a response that is a data item of a different type of data (such as text), because the underlying techniques determine a concept represented by the input data item and output data items that best match the concept.

### Background

Many human users may see an image of a meal (e.g. on social media) and may want to know how they can recreate the meal themselves. However, presently, they would need to know what the meal is called in order to search for a recipe for that meal. Similarly, many human users may want to find recipes for meals that are similar to other meals they like. However, presently, this is difficult to do in a search engine because the search engine does not know how to process the 'similar' part of the query, and will simply present recipes for the meals in the search query that the user already likes. Furthermore, text searches result in text results, and image searches result in only image results.

The present applicant has recognised the need for an improved way to perform searching.

### Summary

In a first approach of the present techniques, there is provided a computer-implemented method for concept matching using a machine learning model, the method comprising: receiving, from a user, a search query comprising at least one criterion that represents at least one concept; inputting the received at least one criterion into at least one neural network for processing the search query; and outputting at least one result in response to the user search query.

In a second approach of the present techniques, there is provided an electronic device comprising: a user interface for receiving, from a user, a search query comprising at least one criterion that represents at least one concept; and at least one processor, coupled to memory, arranged to: input the received at least one criterion into at least one neural network for processing the search query; and output at least one result in response to the user search query.

Preferred features are set out in the appended dependent claims and outlined below, and these apply equally to the first and second approaches of the present techniques.

The search query submitted by the user comprises at least one criterion that represents at least one concept. The term "criterion" is used herein to mean something that is either directly or indirectly representative of a concept (or which directly/indirectly represents a concept). The term "concept" is used herein to mean a latent variable or latent factor, i.e. a variable that is not directly observed but is inferred. Examples of 'concepts' in the particular context of food are provided below. In other words, the at least one criterion may either itself be at least one concept (in which case, 'represent' means that the criterion directly represents one or more concepts), or the at least one criterion may represent at least one concept (in which case, 'represent' means that the criterion indirectly represents one or more concepts). Specifically, the criterion may comprise at least one input data item which represents at least one concept (that needs to be determined/identified), or may comprise at least one concept. These variations are explained in turn below.

As explained in more detail below, the present techniques may, in certain embodiments, enable human users to query a database and obtain a response to the query that comprises a data item of any type or mode of data. For example, a user may input a text query into the system, and the system may respond with a text data item and/or an image data item that best matches the query. This is because the present techniques use a concept represented by the user query, and output one or more data items that best match the concept. The present techniques therefore advantageously enable cross-modal data retrieval to be output in response to an input query.

A non-limiting example use case of the present techniques is a concept-based recipe recommendation system. A human user could query the system using an image of food or a meal, and the system may return a recipe that best matches the food/meal shown in the image. This is advantageous because a user may not always know the words which describe the image they have of a food/meal, and this allows them to search using the image they have and obtain recipes that best match the image. Similarly, a human user could query the system using one or more desired concepts (such as 'savoury', 'watery' and 'green') representing a food item/meal they wish to make, and the system may return images and/or recipes that match the desired concepts. Typically a user may search for recipes using an ingredients list, but the results may not all match what the user wants in terms of concept. The present techniques are advantageous because they enable a user to search based on concepts rather than using an ingredients list, for example.

When the at least one criterion comprises at least one concept or property (e.g. 'watery', 'vegetable', 'savoury', etc.), the user may simply provide at least one concept/property. Preferably, the criterion may also comprise a value or amount (also referred to herein as an 'importance value') for each concept/property. For example, the criterion may be 'sweet' and a value of 80% - this may indicate that the user is searching for data items that depict sweet foods such as desserts and cakes, and not savoury foods. In some cases, the criterion may be a concept and value on a sliding scale between two 'extreme' concepts. For example, the criterion may be a concept that exists between the extreme concept of 'sour' and the extreme concept of 'sweet'. A value of 50% in this case may indicate a concept of 'neither sweet nor sour', while a value of 30% may indicate a concept of 'more sour than sweet', and a value of 70% may indicate a concept of 'more sweet than sour'. Thus, the concept/property does not need to be a discrete property, but may be a variable concept that sits somewhere between two discrete concepts.

When the at least one criterion comprises at least one concept or property, the user may input either all or a subset of all possible concepts/properties, which have been learned by the AI model. As noted above, preferably the user specifies a value for each concept/property. In some cases, the user may input a subset of all the possible concepts and specify a value for each concept in the subset. The method may automatically apply a default value (e.g. a mean value, 50%, or similar) for all the remaining possible concepts. Thus, the concepts that the user did not specifically input may still be used by the method. As explained in more detail with reference to the drawings, in some cases where a user has not specified a value for a concept that they either explicitly input, or which is in the list of all possible concepts, the method may use personalised values or values that have been learned for this specific user, to provide the missing values.

When the at least one criterion comprises at least one concept or property (e.g. 'watery', 'vegetable', 'savoury', etc.), the method may further comprise: retrieving, from storage, at least one data item (such as recipe text, an image, a video, etc.) which matches the at least one concept. In this case, the outputting step comprises outputting the at least one retrieved data item in response to the user search query. That is, because the at least one criterion of the search query directly represents at least one concept, the method uses the search query to provide a data item(s) retrieved from a database/storage that best matches the input concept(s). Data items in the database/storage have been labelled, following training of the neural network(s) on those data items, with one or more concepts that are most relevant to the data item.

When the at least one criterion comprises at least one data item (e.g. a text recipe or an image of food), the method may further comprise: determining, using the at least one neural network, at least one concept represented by the at least one criterion. That is, because the at least one criterion of the search query (indirectly) represents at least one concept, the method may first need to determine/identify each concept (e.g. 'watery', 'vegetable', 'savoury', etc.) represented by the criterion/criteria.

In some cases, once the at least one concept has been determined for the at least one input data item, the user may want at least one data item to be provided which best matches the determined concept(s). Thus, the method may further comprise: retrieving, from storage, at least one data item which matches the determined at least one concept; wherein outputting at least one result comprises outputting the at least one retrieved data item in response to the user search query. That is, the method uses the determined at least one concept to provide a data item(s) retrieved from a database/storage that best matches the determined concept(s). As mentioned above, data items in the database/storage have been labelled, following training of the neural network(s) on those data items, with one or more concepts that are most relevant to the data item.

In other cases, the user may only want to know the at least one concept represented by the input data item(s). In this case, the method may not proceed to retrieve and output a data item from storage.

In any case, once the at least one concept has been determined for the at least one input data item, the method may comprise: outputting a list comprising the determined at least one concept, in response to the user search query. The list may comprise a single predicted concept or more than one predicted concepts. Preferably, the list comprises an importance value alongside each concept. The importance value may be provided so that the user can see the importance placed on each predicted value when proceeding to retrieve data items from storage that match the predicted concept(s). The importance value for each predicted concept may be a default value, such as, for example, 50% or 0.5 which indicates that the concept is neither extremely relevant nor extremely irrelevant when identifying matching data items in storage. That is, the importance value indicates the relevance of each concept if/when identifying matching data items in storage. The importance value may be indicated using numerical values, or may be indicated pictorially/graphically, such as by sliders. It will be understood that these are non-limiting examples, and any other suitable mechanism to indicate the importance value of each predicted concept may be used.

The list may further comprise a confidence value or weight for each predicted concept in the list. The confidence value may indicate the certainty with which the at least one neural network has determined the concept in the input data item(s). In other words, the confidence value provides an indication of how much the determined concept can be trusted. Such confidence values may be related to the process used to train the machine learning model. For example, the list may comprise a 'wateriness' concept and may indicate a confidence value or weight of 80%. The confidence value indicates the system's confidence in identifying the concept 'wateriness' in the input data item(s). The confidence value or score may be measured by manual interpretation during a training process. (After finding an embedding space of input search queries (e.g. images or recipes), each of the dimensions in the space is explored to determine if a concept can be manually assigned to them). That is, after training of the neural network(s), a human inspects data items retrieved by the model in response to varying input concepts, and counts the number of cases where the results correctly identify the concept of 'wateriness'. In this example, 80% of the cases were correct. Outputting the list with the confidence level for each predicted concept advantageously improves the interpretability of the machine learning model, since it provides some insight into why any output data items are selected for output in response to a search query.

The list comprising the determined at least one concept may be used by the user in a number of ways. In one example, as mentioned above, the list may simply be the result the user expected/wanted from the search query. They may view the list and use the list for their own purposes.

In another example, the user may view the list and realise that one or more of the determined concepts has been incorrectly determined by the neural network(s). In this case, the method may further comprise: receiving information from the user specifying that one or more concepts in the list is incorrect; and transmitting the received information to an external server for retraining the at least one neural network. In this example, the user information indicates that the neural network(s) which they have accessed or used on their electronic device (e.g. smartphone, laptop, etc.) may need to be retrained using the at least one data item that was input and for which the list was generated. Such training may be performed globally, rather than locally on the user's electronic device, because the error may appear for other users using the same neural network(s). The retrained neural network(s) and machine learning model may then be rolled-out to all users. Retraining may happen whenever user-provided information specifying that one or more concepts in the list is incorrect, or may happen periodically (e.g. every week, every month, etc.), or may happen when such information has been received a certain number of times (e.g. after 100 instances or 1000 instances, etc.)

In another example, the user may want to adjust the importance value of one or more predicted concepts before at least one data item is retrieved and outputted based on the predicted concepts. As explained above, the importance value may indicate the relevance of each concept if/when the method identifies data items in storage that match the concept(s). The user may want to modify the importance value based on their own personal preferences. For instance, one of the predicted concepts may be 'savoury' with an importance value of 50% and another may be 'meat' with an importance value of 50%. The user may have a strong preference for savoury foods and may be vegetarian, and therefore may want to change the importance value of 'savoury' to 80% and 'meat' to 0% to ensure that the data item(s) returned in response to their query better reflects their personal preferences. This may enable the method to retrieve and output data items that strongly represent the concept of 'savoury'. The importance value for each predicted concept may be a default value, such as, for example, 50% or 0.5 which indicates that the concept is neither extremely relevant nor extremely irrelevant when identifying matching data items in storage. As a result, the user may want to adjust the importance value of one or more concepts to better reflect their personal preferences.

Thus, the method may further comprise: receiving a user input modifying an importance value of at least one predicted concept in the outputted list. In this case, the step of retrieving may comprise: retrieving, from storage, at least one data item which matches the determined at least one concept as modified by the received user input. That is, the method uses the predicted concept(s) and the associated importance value, except where that importance value has been adjusted by the user, in which case the adjusted importance value is used.

The method may further comprise storing each user modified importance value for a predicted concept for personalising responses to subsequent queries received from the same user. Thus, every time the user modifies an importance value, the method may store the modified importance value for use when responding to future queries from the user. This is advantageous because any output data items will better reflect the user's preferences, as determined each time the user modifies an importance value. Furthermore, when the list of predicted concepts for input data item(s) is output to the user, the importance values shown alongside the predicted concepts may be based on the user's existing, stored personal preferences. For example, if the user previously modified a 'savoury' concept from 50% to 80%, the next time a user inputs a data item in which the 'savoury concept is identified, the list may output 'savoury' alongside an associated importance value of 80%. The user can then easily see that their personal preference has been remembered. Similarly, this allows a user to further adjust the associated importance value. For example, the user may change the importance value of 'savoury' to 60% or to 90%, to reflect their changing personal preferences, or to reflect what they are specifically interested in at this point in time.

The received user search query may specify a type of data item to be provided in response to the query. For example, the user may want text data items to be provided in response to the query, if they are searching for a recipe, and may specify this in their query. The outputting step of the method may comprise: outputting at least one retrieved data item of the specified type in response to the user search query. In other cases, the method may comprise outputting the most suitable data items in response to the user search query. For example, if the user query comprises a data item of a particular mode type (e.g. an image), the outputting step may comprise outputting at least one retrieved data item of a different mode type (e.g. text recipe, and/or a video showing a recipe and method). In another example, the method may comprise outputting data items of any or all mode types/modalities (e.g. images, text, videos, etc.) and allow the user to see all the results and choose for themselves which they want.

In cases where the at least one criterion comprises at least one data item, the method may comprise: determining a mode type of the at least one data item; and identifying, using the determined mode type, a trained neural network suitable for processing data items of the determined mode type. That is, the system may comprise multiple neural networks for processing the at least one data item in the user search query, where each neural network is suitable for processing data items of a specific mode type, such as text only or images only. Thus, in order to perform the concept-based searching, the at least one data item needs to be processed by a trained neural network that is suitable for processing the data item, in order to determine at least one concept represented by the data item. (Where multiple data items of multiple different modes/types are provided by the user in the search query, multiple trained neural networks may be used to process the data items, as outlined below.) Once the mode type of the at least data item has been determined, the inputting step may comprise: inputting the received at least one data item into the identified trained neural network, to determine at least one concept represented by the at least one data item.

As noted above, the at least one criterion may comprise multiple data items of different mode types. For example, the at least one criterion may comprise a first data item of a first mode type (e.g. text), and a second data item of a second mode type (e.g. image). In this case, the method may further comprise: determining the first mode type and the second mode type; and identifying a first trained neural network suitable for processing data items of the first mode type, and a second trained neural network suitable for processing data items of the second mode type, to determine at least one concept that is represented by both the first data item and second data item. In this case, the inputting step may comprise: inputting the first data item of the first mode type into the first neural network, and inputting the second data item of the second mode type into the second neural network.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

In a third approach of the present techniques, there is provided a computer-implemented method for training a machine learning model to perform concept matching, the method comprising: obtaining a training data set comprising a plurality of pairs of data items, each pair of data items comprising a first data item of a first mode type and a second data item of a second mode type, where the first data item and the second data item have at least one concept in common; inputting each pair of data items into at least one neural network to determine at least one concept represented by both the first data item and the second data item; and training the at least one neural network to satisfy a set of training conditions.

The machine learning model may comprise two stages: a modality embedding stage use to identify concepts for each data item of a pair of data items, and a decomposition stage, for disentangling links between the identified concepts.

The modality embedding stage may comprise embedding neural networks for processing each data item of a pair of data items. Each embedding neural network may suitable for processing data items of a specific mode type (e.g. images, or text, or videos, etc.) Thus, the inputting step may comprise: inputting each pair of data items into at least one modality embedding neural network comprising at least one encoder, wherein the at least one modality embedding neural network outputs, for each pair, a pair of encoder vectors representing the first data item and second data item.

The decomposition stage may comprise inference neural networks for determining which of the identified concepts are common to both data items in a pair. Common, independent concepts are discovered without user intervention or without data labelling, and indicate disentangled links between the data items in a pair. Thus, the inputting step may further comprise: inputting each pair of encoder vectors into at least one inference network to determine a common concept vector representing at least one concept common to both the first data item and second data item.

The decomposition stage may comprise decomposition neural networks for reconstructing the independent concepts, i.e. for reconstructing a description of the determined common concepts for each mode type, so that these descriptions can be used to identify data items of a particular mode type that match a concept. Thus, the inputting step may further comprise: inputting the common concept vector into a decomposition neural network comprising at least one decoder, wherein the decomposition neural network outputs, a pair of decoder vectors representing the at least one concept common to both the first data item and second data item.

Training the machine learning model to satisfy a set of training conditions may comprise training the neural networks such that, for each pair of encoder vectors and corresponding pair of decoder vectors: the encoder vector for the first data item is similar to the decoder vector for the first data item, and the encoder vector for the second data item is similar to the decoder vector for the second data item. In other words, the training conditions may specify an auto-encoding cosine loss condition.

Training the machine learning model to satisfy a set of training conditions may comprise training the neural networks such that, for each pair of encoder vectors and a corresponding pair of decoder vectors: the encoder vector for the first data item is similar to the decoder vector for the second data item, and the encoder vector for the second data item is similar to the decoder vector for the first data item. In other words, the training conditions may specify a cross-modal cosine loss condition.

The training conditions may specify that the determined common concept vector (representing at least one concept common to both the first data item and second data item) have dimensions or concepts which are as independent as possible from each other. In other words, the training conditions may specify a total correlation loss condition.

The training conditions may specify that the encoder vectors for similar data items of the same mode type are similar. That is, two similar text recipes, or two similar images, should have similar encoder vectors. In other words, the training conditions may specify a smooth Jacobian loss condition.

The model may be trained until convergence.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an Al-dedicated processor such as a neural processing unit (NPU). The one or a plurality of processors control the processing of the input data in accordance with a predefined operating rule or artificial intelligence (Al) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

In a related approach of the present techniques, there is provided a non-transitory data carrier carrying processor control code to implement the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

### Brief description of drawings

Implementations of the present techniques will now be described, by way of example only, with reference to the accompanying drawings, in which:
Figure 1 is a schematic diagram of a system to implement the present techniques;
Figure 2 is a flow chart of example steps to perform concept matching;
Figures 3A and 3B are, respectively, schematic diagrams of how a search query comprising a single data item or multiple data items are processed by neural networks to determine at least one concept;
Figure 4 is a schematic diagram showing how at least one concept is used to provide a response to a search query;
Figure 5 is a schematic diagram showing how a user may modify an importance value associated with the predicted at least one concept;
Figure 6 is a schematic diagram showing how a user's preferences may be used to modify the importance value associated with the predicted at least one concept;
Figure 7 is a schematic diagram showing how a search query may comprise at least one concept and stored importance value, and that the user may further modify the importance value;
Figure 8 is a flowchart of example steps for training a machine learning model to perform concept matching;
Figure 9 is a schematic diagram of a machine learning model used to perform concept matching; and
Figure 10 is a more detailed diagram of the machine learning model of Figure 9 and the training conditions.

### Detailed description of drawings

Broadly speaking, the present techniques relate to methods, apparatuses and systems for searching based on one or more identified concepts in a user-input search query. Specifically, the present application describes artificial intelligence based techniques for matching data items (such as images and text) which represent the same concept(s), without requiring human annotation of the data items. Advantageously, this may enable humans to query a database using one type of data item (such as an image) and obtain a response that is a data item of a different type of data (such as text), because the underlying techniques determine a concept represented by the input data item and output data items that best match the concept.

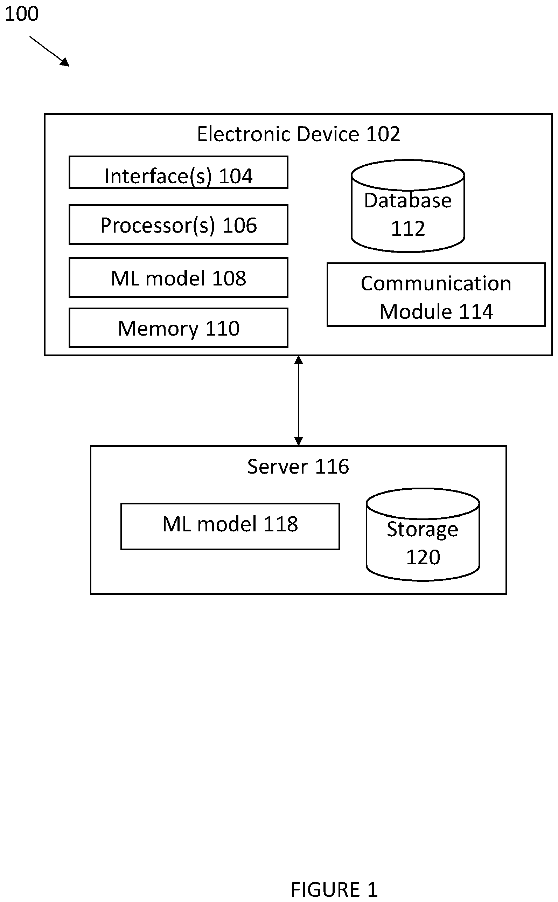

Figure 1 is a schematic diagram of a system 100 to implement the present techniques. The system 100 comprises an electronic device 102 and a server 116. The present techniques may be implemented entirely on the electronic device 102, entirely on the server 116, or partly on the electronic device 102 and partly on the server 116.

The electronic device 102 may be any one of: a smartphone, tablet, laptop, computer or computing device, virtual assistant device, a vehicle, a drone, an autonomous vehicle, a robot or robotic device, image capture system or device, an augmented reality system or device, a virtual reality system or device, a gaming system, an Internet of Things device, or a smart consumer device (such as a smart fridge). It will be understood that this is a non-exhaustive and non-limiting list of example devices.

The electronic device 102 may comprise one or more interfaces 104 that enable the electronic device 102 to receive inputs and/or provide outputs. For example, the electronic device 102 may comprise a display screen to receive user inputs (e.g. a user search query), and to display the results of implementing a machine learning model (e.g. the results of the user search query). Thus, the electronic device may comprise a user interface for receiving, from a user, a search query comprising at least one criterion that represents at least one concept.

The electronic device 102 may comprise at least one processor or processing circuitry 106. The processor 106 controls various processing operations performed by the electronic device 102, such as communication with other components in system 100, and implementing at least part of a machine learning model on the device 102. The processor may comprise processing logic to process data and generate output data/messages in response to the processing. The processor may comprise one or more of: a microprocessor, a microcontroller, and an integrated circuit.

The electronic device 102 may comprise memory 110. Memory 110 may comprise a volatile memory, such as random access memory (RAM), for use as temporary memory, and/or non-volatile memory such as Flash, read only memory (ROM), or electrically erasable programmable ROM (EEPROM), for storing data, programs, or instructions, for example.

The electronic device 102 may comprise a machine learning (ML) model 108. The machine learning model 108 may be stored in memory 110.

The electronic device 102 may comprise a database 112 of data items which can be searched in response to receiving a user search query, and from which data items can be retrieved and provided to the user in response to the search query. The database 112 may be stored in memory 110. Thus, the electronic device 102 may comprise storage 112 comprising a plurality of data items, each data item labelled with at least one concept. Each data item may also be labelled with a label indicating a mode type of the data item.

The electronic device 102 may comprise a communication module 114 to enable the electronic device 102 to communicate with other devices/machines/components of the system 100. The communication module 114 may be any communication module suitable for sending and receiving data. The communication module may communicate with other machines in system 100 using any one or more of: wireless communication (e.g. WiFi), hypertext transfer protocol (HTTP), message queuing telemetry transport (MQTT), a wireless mobile telecommunication protocol, short range communication such as radio frequency communication (RFID) or near field communication (NFC), or by using the communication protocols specified by ZigBee, Thread, Bluetooth, Bluetooth LE, IPv6 over Low Power Wireless Standard (6LoWPAN), Constrained Application Protocol (CoAP), wired communication. The communication module 114 may use a wireless mobile (cellular) telecommunication protocol to communicate with machines in the system, e.g. 3G, 4G, 5G, 6G etc. The communication module 114 may communicate with machines in the system 100 using wired communication techniques, such as via metal cables or fibre optic cables. The electronic device 102 may use more than one communication technique to communicate with other components in the system 100. It will be understood that this is a non-exhaustive list of communication techniques that the communication module 114 may use. It will also be understood that intermediary devices (such as a gateway) may be located between the electronic device 102 and other components in the system 100, to facilitate communication between the machines/components.

The at least one processor 106, coupled to memory 110, may be arranged to: input the received at least one criterion into at least one neural network for processing the search query; and output at least one result in response to the user search query.

The server 116 may be a remote server, such as a cloud-based server. The machine learning model of the present techniques may be trained in the server 116 for deployment on multiple electronic devices 102. A global machine learning model 118 may be stored in the server 116 and transmitted to each electronic device 102. The machine learning model 118 may have been trained using a training data set, which may be stored in storage 120. Storage 120 may comprise a plurality of data items, each data item labelled with at least one concept. Each data item may also be labelled with a label indicating a mode type of the data item. A copy of the machine learning model 118, plurality of data items, and possibly also the training data set may be provided to the electronic device 102 and saved locally (as ML model 108 and database 112).

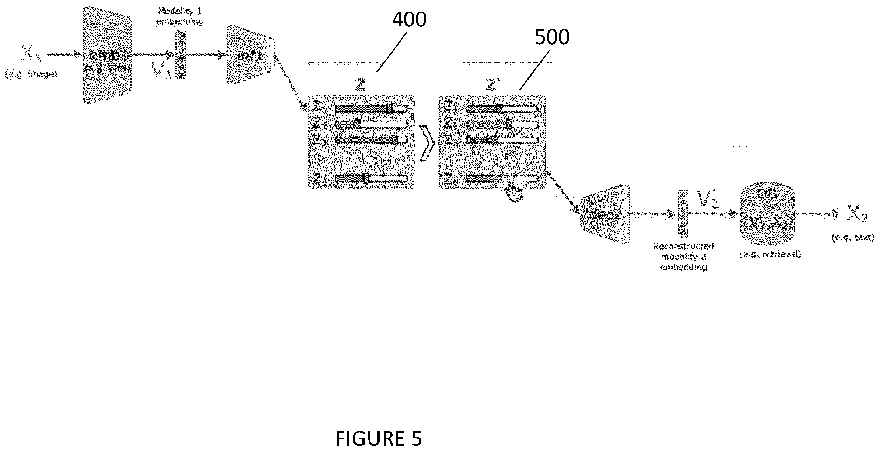

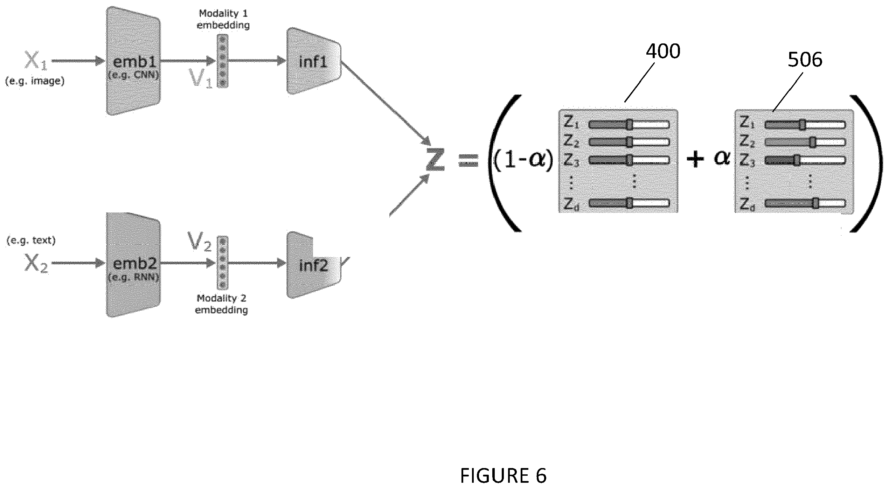

In some cases, the training of the global machine learning model 118 is performed off-device, e.g. on server 116. This is so that a single machine learning model can be trained centrally - the trained model is then provided to each electronic device 102 for use. However, it may sometimes be desirable to customise or personalise the global machine learning model based on an individual user's requirements or preferences. In this case, local adjustments to the operation of the machine learning model may be made on the electronic device 102 based on user input, as described below with reference to Figures 5 and 6.

In some cases, the implementation/application of the machine learning model may be performed on-device, e.g. on electronic device 102. However, it may sometimes be necessary to distribute the implementation of the machine learning model between the electronic device 102 and the server 116. For example, if the electronic device 102 does not have the processing capability to fully implement the machine learning model 108, some steps may be implemented on the electronic device 102 and some may be performed on the server 116.

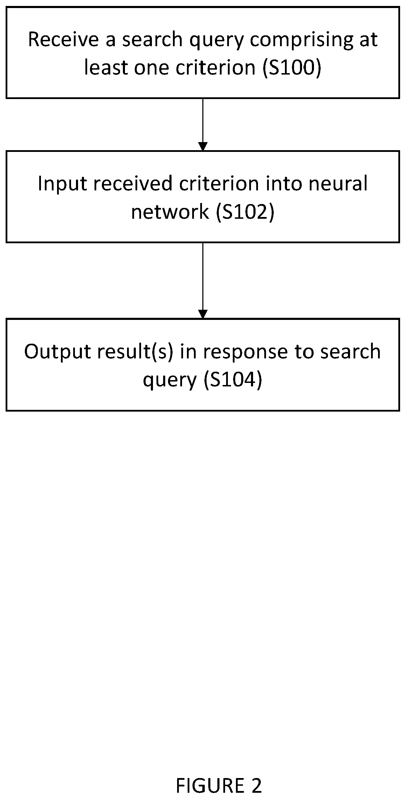

Figure 2 is a flow chart of example steps to perform concept matching using a machine learning model. The steps may be performed entirely on electronic device 102 or may be distributed between electronic device 102 and server 116.

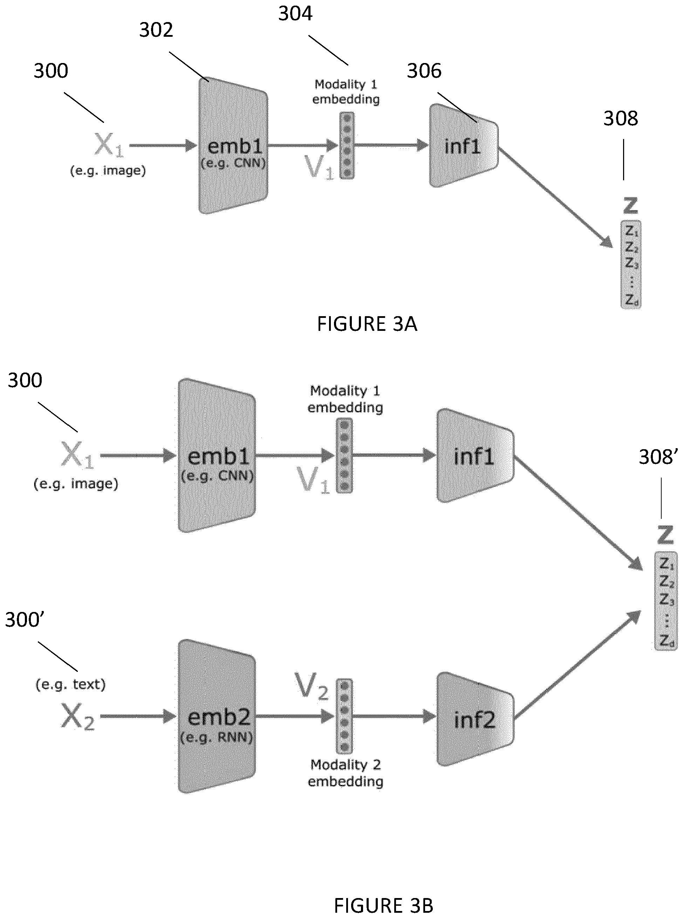

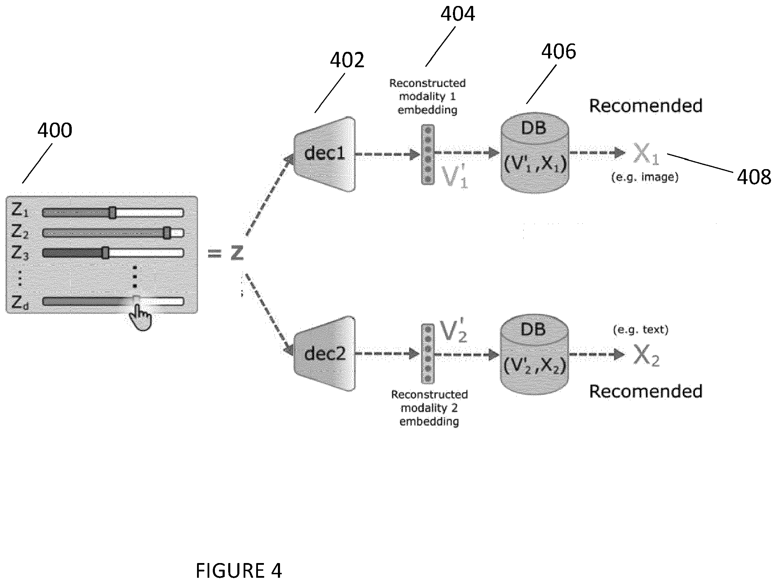

The method begins when the electronic device 102 receives, from a user, a search query comprising at least one criterion (step S100) that represents at least one concept. The at least one criterion may either itself be at least one concept (in which case, 'represent' means that the criterion directly represents one or more concepts), or the at least one criterion may represent at least one concept (in which case, 'represent' means that the criterion indirectly represents one or more concepts). Specifically, the criterion may comprise at least one input data item which represents at least one concept (that needs to be determined/identified), or may comprise at least one concept. These variations are explained in turn below with reference to Figures 3A, 3B and 4. The search query may be received via a user interface 104, such as via a display, or via any other suitable interface.

The method comprises inputting the received at least one criterion into at least one neural network of the machine learning model 108, for processing the search query (step S102). Depending on the capabilities of the electronic device 102, the processing of the at least one criterion by the at least one neural network may be performed entirely on the electronic device 102, or partly on the electronic device 102 and partly on the server 116, or entirely on the server 116. If all or part of the processing is performed by the server 116, the server uses ML model 118 to perform the processing. Any techniques for distributing the implementation of a machine learning model across machines may be used, if required.

After the machine learning model 108 has processed the at least one criterion, the method proceeds to output at least one result in response to the user search query (step S104). As explained below, the outputted result(s) may depend on the input criterion/criteria, and/or on what the user wishes to receive in response to their search query.

As explained in more detail below, in certain embodiments, the present techniques may enable human users to query a database and obtain a response to the query that comprises a data item of any type or mode of data. For example, a user may input a text query into the system, and the system may respond with a text data item and/or an image data item that best matches the query. This is because the present techniques determine a concept represented by the user query, and output one or more data items that best match the concept. The present techniques therefore advantageously enable cross-modal data retrieval to be output in response to an input query.

A non-limiting example use case of the present techniques is a concept-based recipe recommendation system. A human user could query the system using an image of food or a meal, and the system may return a recipe that best matches the food/meal shown in the image. This is advantageous because a user may not always know the words which describe the image they have of a food/meal, and this allows them to search using the image they have and obtain recipes that best match the image. Similarly, a human user could query the system using one or more desired concepts (such as 'savoury', 'watery' and 'green') representing a food item/meal they wish to make, or by specifying importance values associated with a set of concepts (such as 'savoury': 80%, 'watery': 50%, and 'green': 20%), and the system may return images and/or recipes that match the desired concepts. (It will be understood the user could specify importance values for a set of concepts using any mechanism, e.g. numerical values, percentages, using a 0-5 scale of importance, using sliders, etc.)Typically a user may search for recipes using an ingredients list, but the results may not all match what the user wants in terms of concept. The present techniques are advantageous because they enable a user to search based on concepts rather than using an ingredients list, for example.

As shown in step S100 of Figure 2, the search query submitted by the user comprises at least one criterion. The criterion may comprise at least one input data item, or may comprise at least one concept. These variations are explained in turn below.

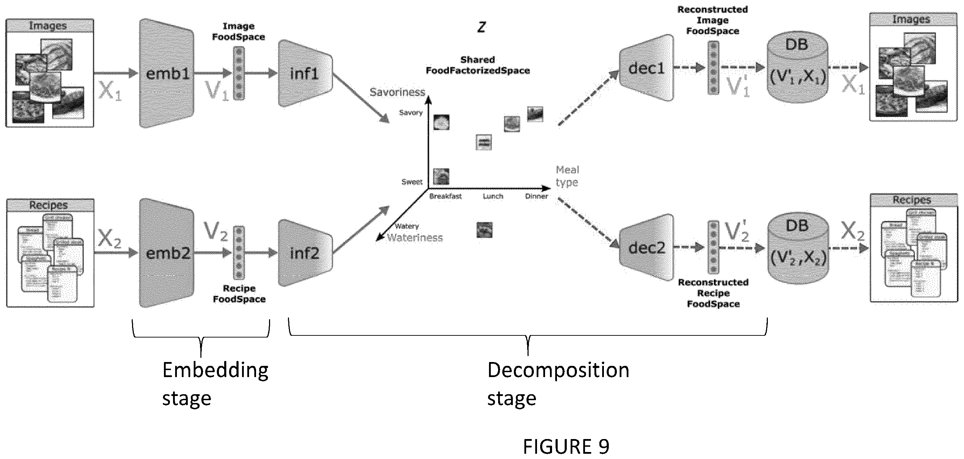

Figures 3A and 3B are schematic diagrams illustrating how a search query may comprise at least one input data item, and how this at least one input data item may be processed by neural networks to determine at least one concept. That is, because the at least one criterion of the search query - the data item - (indirectly) represents at least one concept, the method may need to determine/identify each concept (e.g. 'watery', 'vegetable', 'savoury', etc.) represented by the criterion/criteria. Figure 3A shows a search query that comprises a single data item, while Figure 3B shows a search query that comprises two data items. It will be understood that Figures 3A and 3B show only a portion of the machine learning model - the full model can be seen in Figure 9, for example.

The machine learning model may comprise multiple neural networks for processing a search query and providing a response to the query. As will be described in more detail below, the machine learning model may comprise two stages: a modality embedding stage for identifying concepts for each data item in a search query, and a decomposition stage, for disentangling links between the identified concepts.

The modality embedding stage may comprise embedding neural networks 302 (e.g. emb1 and emb2) for processing each data item of a pair of data items. The embedding neural networks may be, for example, convolutional neural networks (CNNs) or recurrent neural networks (RNNs). Each embedding neural network 302 may suitable for processing data items of a specific mode type (e.g. images, or text, or videos, etc.) As shown in Figure 3A, the search query comprises a data item 300 (X1), which may be an image, while in Figure 3B, the search query comprises data item 300 (X1) and data item 300' (X2), where data item 300 may be an image and data item 300' may be text. Thus, an embedding neural network emb1 of the machine learning model may be used to process data item 300, i.e. data items that are images, and an embedding neural network emb2 of the machine learning model may be used to process data item 300', i.e. data items that are text files. Emb1 may be a CNN, and emb2 may be an RNN, in certain embodiments.

Thus, each embedding neural network may be suitable for processing data items of a specific mode type, such as text only or images only. Thus, in order to perform the concept-based searching, the at least one data item needs to be processed by a trained neural network that is suitable for processing the data item, in order to determine at least one concept represented by the data item.

When the at least one criterion comprises at least one data item (e.g. a text recipe or an image), the method to perform concept matching may further comprise: determining a mode type of the at least one data item; and identifying, using the determined mode type, a trained neural network suitable 300 (e.g. emb1, emb2, etc.) for processing data items of the determined mode type.

Once the mode type of the at least data item has been determined, the inputting step may comprise: inputting the received at least one data item into the identified trained neural network 302, to determine at least one concept represented by the at least one data item. As shown in Figure 3A, the data item 300 is input into a suitable embedding neural network 302 for processing.

In Figure 3B, the at least one criterion comprises a first data item 300 of a first mode type, and a second data item 300' of a second mode type. In this case, the method may further comprise: determining the first mode type and the second mode type; and identifying a first trained neural network (e.g. emb1) suitable for processing data items of the first mode type, and a second trained neural network (e.g. emb2) suitable for processing data items of the second mode type, to determine at least one concept that is represented by both the first data item and second data item. In this case, the inputting step may comprise: inputting the first data item 300 of the first mode type into the first neural network emb1, and inputting the second data item 300' of the second mode type into the second neural network emb2.

Each modality embedding neural network outputs, for each data item, an encoder vector 304 representing the data item. In Figure 3A, only a single encoder vector 304 (V1) is generated as there is only one data item in the search query, while in Figure 3B, two encoder vectors (V1, V2) are generated as there are two data items in the search query.

The decomposition stage may comprise inference neural networks 306 (e.g. inf1, inf2) for determining at least one concept represented by either a single data item, or at least one concept in common to multiple data items. Figure 3A shows how the encoder vector 304 is input into an inference neural network 306, and the inference neural network outputs a list or vector 308 comprising at least one concept represented by data item 300. Figure 3B shows how the two encoder vectors are each input into respective inference neural networks, and these inference neural networks output a list or vector 308' comprising at least one concept that is common to both data items 300, 300'. The vector 308, 308' may now be used to provide a response to a search query.

In some cases, once the at least one concept has been determined for the at least one input data item, the user may want at least one data item to be provided which best matches the determined concept(s). This is not shown in Figures 3A and 3B, but can be seen in, for example, Figure 5. Thus, the method may further comprise: retrieving, from storage, at least one data item which matches the determined at least one concept; wherein outputting at least one result comprises outputting the at least one retrieved data item in response to the user search query. That is, the method uses the determined at least one concept (as provided in the list/vector 308, 308') to provide a data item(s) retrieved from a database/storage that best matches the determined concept(s).

In other cases, the user may only want to know the at least one concept represented by the input data item(s). In this case, the method may not proceed to retrieve and output a data item from storage.

In any case, once the at least one concept has been determined for the at least one input data item, the method may comprise: outputting a list comprising the determined at least one concept, in response to the user search query. That is, the method may output the list/vector 308 or 308'.

Figure 4 is a schematic diagram showing how at least one concept is used to provide a response to a search query. Here, the at least one criterion of the search query submitted by the user may comprise at least one concept. However, this diagram also illustrates how a user may modify importance values of predicted concepts (such as those of vectors 308, 308' in Figures 3A and 3B) to suit their personal preferences. In the case where the user's search query comprises at least one concept, the system may display vector or list 400 comprising the at least one concept alongside importance values. The importance values may be a default value for each concept and/or may be stored values based on the user's previous search queries and personalisation. In the case where the user's search query comprises at least one data item, the system may display vector/list 400 comprising at least one determined/predicted concept alongside importance values (and possibly alongside confidence values). Again, the importance values may be a default value for each concept and/or may be stored values based on the user's previous search queries and personalisation.

Here, the vector or list 400 comprising the at least one concept is shown here as having multiple concepts Z1 to Zd. The importance value of each concept Z1 to Zd is indicated using sliders. It will be understood that this is a non-limiting example, and any other suitable mechanism to indicate the importance value of each predicted concept may be used.

In another example, the user may view the list and realise that one or more of the determined concepts has been incorrectly determined by the neural network(s). In this case, the method may further comprise: receiving information from the user specifying that one or more concepts in the list is incorrect; and transmitting the received information to an external server for retraining the at least one neural network. In this example, the user information indicates that the neural network(s) which they have accessed or used on their electronic device (e.g. smartphone, laptop, etc.) may need to be retrained using the at least one data item that was input and for which the list was generated. Such training may be performed globally, rather than locally on the user's electronic device, because the error may appear for other users using the same neural network(s). The retrained neural network(s) and machine learning model may then be rolled-out to all users. Retraining may happen whenever user-provided information specifying that one or more concepts in the list is incorrect, or may happen periodically (e.g. every week, every month, etc.), or may happen when such information has been received a certain number of times (e.g. after 100 instances or 1000 instances, etc.)

The user may want to adjust the importance value of one or more predicted concepts Z1 to Zd before at least one data item is retrieved and outputted based on the predicted concepts. As explained above, the importance value may indicate the relevance of each concept if/when the method identifies data items in storage that match the concept(s). The user may want to modify the importance value based on their own personal preferences. As shown in Figure 4, a user may modify (e.g. increase) the importance value associated with concept Zd using a slider mechanism. It can be seen that the importance values associated with concepts Z1, Z2, Z3 and Zd are different, indicating each concept's relevance.

The vector or list 400 is then processed by the remainder of the decomposition stage of the machine learning model. The decomposition stage may comprise decomposition neural networks 402 (e.g. dec1, dec2) for reconstructing the independent concepts, i.e. for reconstructing a description of the determined concepts for each input mode type, so that these descriptions can be used to identify data items of a particular mode type that match a concept. Thus, the concept matching process may further comprise: inputting the concept vector 400 into a decomposition neural network 401 comprising at least one decoder, wherein the decomposition neural network outputs, at least one decoder vector 404 (e.g. V1', V2') representing the at least one concept. In the case where a single data item is in the search query (as per Figure 3A), a single decomposition network 402 is used to process the vector 400, where the decomposition network may be suitable for processing data related to a particular mode type (e.g. images). In the case where two or more data items are in the search query (as per Figure 3B), two or more decomposition networks 402 may be used to process the vector 400, where each network 402 may be suitable for processing data related to a particular mode type (e.g. images, or text). That is, the user may be provided with all possible relevant results of multiple mode types. Alternatively, a single decomposition network may be used to process the vector 400 based on using the network associated with a mode type that is different to the mode type of the input data item(s). In other words, if the user input a text recipe, a decomposition network for images may be used to process the vector 400, for example. Further alternatively, the user may specify in their search query, a mode type of any data item(s) returned in response to their query.

Once the decoder vector(s) 404 is determined, the machine learning model uses the decoder vector to obtain suitable results in response to search query. Thus, the method comprises retrieving, from storage 406, at least one data item 408 which matches the determined at least one concept. The method then comprises outputting the at least one retrieved data item 408 in response to the user search query.

As shown in Figure 4, the method may further comprise receiving a user input modifying an importance value of at least one predicted concept in the outputted list. In this case, the step of retrieving may comprise: retrieving, from storage 406, at least one data item 408 which matches the determined at least one concept 400 as modified by the received user input. That is, the method uses the predicted concept(s) and the associated importance value, except where that importance value has been adjusted by the user, in which case the adjusted importance value is used.

The received user search query may specify a type of data item to be provided in response to the query. For example, the user may want text data items to be provided in response to the query, if they are searching for a recipe, and may specify this in their query. The outputting step of the method may comprise: outputting at least one retrieved data item of the specified type in response to the user search query. In other cases, the method may comprise outputting the most suitable data items in response to the user search query. For example, if the user query comprises a data item of a particular mode type (e.g. an image), the outputting step may comprise outputting at least one retrieved data item of a different mode type (e.g. text recipe, and/or a video showing a recipe and method).

Figure 5 is a schematic diagram showing how a user may modify an importance value associated with the predicted at least one concept. In some cases, the method may comprise providing the user with partial results, such as the list/vector comprising at least one predicted concept 400, before providing the user with complete results (such as the at least one retrieved data item) to the query. For example, when the method needs to determine at least one concept represented by the at least one criterion, the method may comprise providing the user with the predicted concept(s) 400 before proceeding to retrieve at least one data item that matches the determined predicted concept(s). This advantageously improves the interpretability of the machine learning model, since it provides some insight into why the output data items are selected for output. Furthermore, this advantageously allows the user to adjust an importance value associated with the predicted concept(s) based on their own preferences, before data items are retrieved and output. Thus, as mentioned above, the method may further comprise: outputting, on a user interface, a list 400 comprising the determined at least one predicted concept represented by the at least one criterion. The list may comprise a single predicted concept or more than one predicted concepts. In Figure 5, the list 400 comprises multiple predicted concepts z1 to zd. The list may indicate a current importance of each predicted concept. In Figure 5, the importance value of each predicted concept is shown by sliders next to each concept z1 to zd. For example, the list may list three predicted concepts together with their importance, as determined from the input criterion: "savouriness, 50%", "wateriness, 80%" and "oven baked, 40%".

The list 400 may further comprise a confidence value or weight (not shown) for each predicted concept z1 to zd in the list. The confidence value may indicate the certainty with which the at least one neural network has determined the concept in the input data item(s). In other words, the confidence value provides an indication of how much the determined concept can be trusted.

The user may adjust the importance value associated with one or more predicted concepts in the displayed list, for the reasons explained above. Thus, the method may comprise: receiving, via the user interface, a user input 500 modifying an importance value of at least one predicted concept in the displayed list 400. It can be seen in Figure 5 by comparing the importance values (slider positions) of the predicted concepts 400 with the user input 500 that the user has modified the importance values of a number of the predicted concepts, as the slider positions have been changed.

If the user adjusts the importance value of one or more predicted concepts, the retrieving step may comprise: retrieving, from storage, at least one data item which matches the determined at least one concept as modified by the received user input. That is, the method uses the predicted concept(s) and associated importance value, except where that importance value has been adjusted by the user, in which case the adjusted importance value is used.

Figure 6 is a schematic diagram showing how a user's preferences may be used to modify the importance value associated with the predicted at least one concept. The predicted concept(s) 400 generated by the machine learning model may be generated based on analysing the at least one criterion in the search query, and based on the original training of the model using training data. The machine learning model may learn individual user's preferences, such as their preferred importance values for particular concepts, from their previous search queries. For example, if the user has previously increased the importance of a particular concept (e.g. "oven baked"), then the model may learn that the user wants to see this particular concept in the response to their query. Thus, the model may modify the importance values in the list comprising the predicted at least one concept based on the user's preferences, which are learned over time. Figure 6 shoes how, given a search query, the model can generate predicted concepts 400 having associated importance values, and then modify the importance values of the predicted concepts based on the user's preferences 600, such that the final list of predicted concepts has taken into account the user's preferences. The importance values of the predicted concepts 400 may be modified by a ratio of α, as shown in Figure 6. Each query submitted by a user may be used to update the user's preferences (e.g. their preferred importance values for a set of concepts). As mentioned earlier, this localised learning or personalisation may be performed on the electronic device 102, as it is specific to the user and does not need to be performed globally.

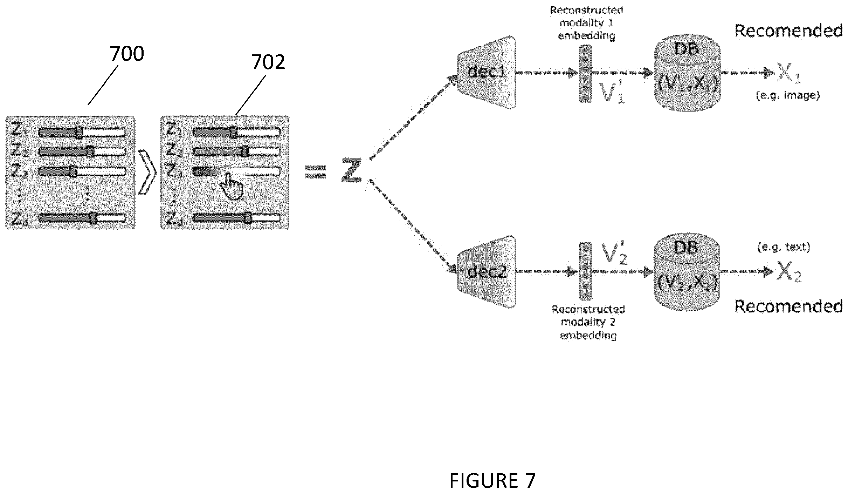

Figure 7 is a schematic diagram showing how a search query may comprise at least one concept and stored (and learned) importance values and that the user may further modify the importance values of one or more concepts as part of their search query. Thus, the at least one criterion provided by the user may comprise at least one concept instead of at least one data item, and an associated importance value (that is either a stored or default value, or a user-modified value that is modified as part of their query). As shown in Figure 7, the model may already have some stored concepts and importance values 700 based on the user's previous search queries. The user search query may then comprise inputting a modification 702 of the importance value of at least one stored concept. This modification 702 is used as the search query. This allows a user to input a search query based on their learned personal preferences (i.e. a stored set of concepts and importance values), and how their query may include one or more modifications to their existing personal preferences. Processing of the modified concept list 702 by the decomposition stage of the model is required to provide a response to the search query. Thus, the user modification 702 is processed by the decomposition network(s), as shown in Figure 7.

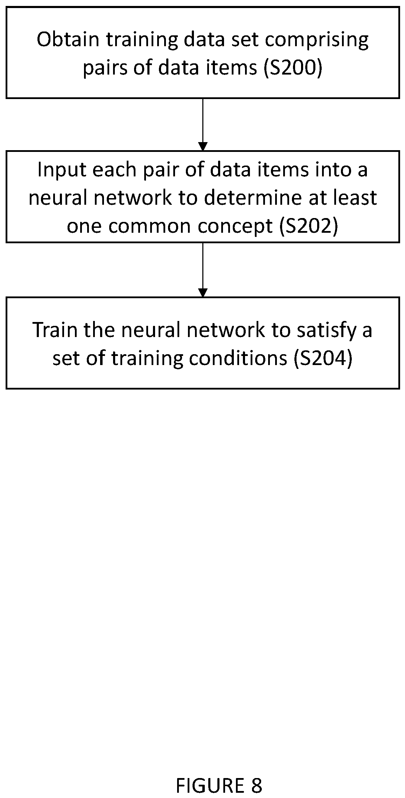

Figure 8 is a flowchart of example steps for training a machine learning model to perform concept matching. The training method may comprise: obtaining a training data set comprising a plurality of pairs of data items (step S200), each pair of data items comprising a first data item of a first mode type and a second data item of a second mode type, where the first data item and the second data item have at least one concept in common. The training method may comprise inputting each pair of data items into at least one neural network to determine at least one concept represented by both the first data item and the second data item (step S202). The training method may comprise training the at least one neural network to satisfy a set of training conditions (step S204).

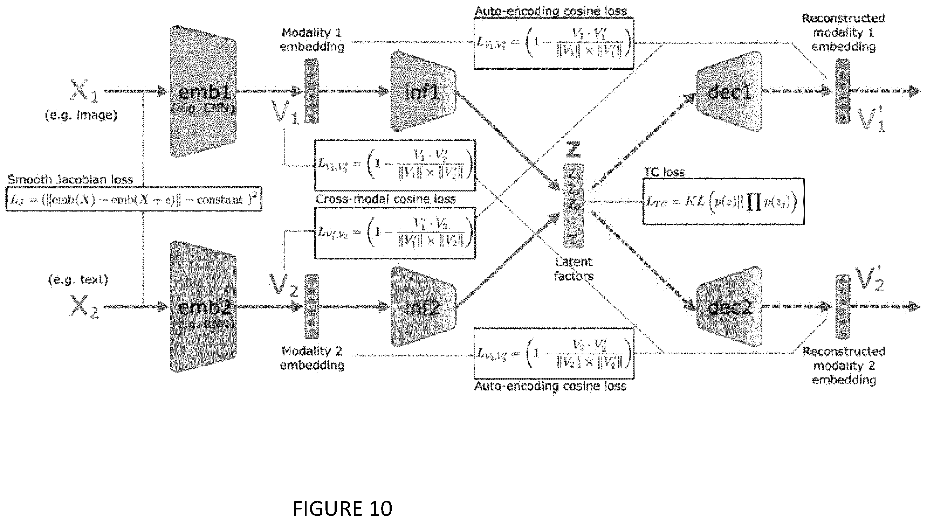

Figure 9 is a schematic diagram of a machine learning model used to perform concept matching. Figure 10 is a more detailed diagram of the machine learning model of Figure 9 and the training conditions. The machine learning model may comprise two stages: a modality embedding stage use to identify concepts for each data item of a pair of data items, and a decomposition stage, for disentangling links between the identified concepts. A pair of data items comprises a first data item X1, and a second data item X2.

The modality embedding stage may comprise embedding neural networks (e.g. emb1, emb2, etc.) for processing each data item of a pair of data items. Each embedding neural network may suitable for processing data items of a specific mode type (e.g. images, or text, or videos, etc.) Thus, the inputting step may comprise: inputting each pair of data items (X1, X2) into at least one modality embedding neural network comprising at least one encoder, wherein the at least one modality embedding neural network outputs, for each pair, a pair of encoder vectors (V1, V2) representing the first data item (X1) and second data item (X2).

The decomposition stage may comprise inference neural networks (e.g. inf1, inf2, etc.) for determining which of the identified concepts are common to both data items in a pair. Common, independent concepts are discovered without user intervention or without data labelling, and indicate disentangled links between the data items in a pair. Thus, the inputting step may further comprise: inputting each pair of encoder vectors into at least one inference network (inf1, inf2) to determine a common concept vector, z, representing at least one concept common to both the first data item (X1) and second data item (X2).

The decomposition stage may comprise decomposition neural networks (e.g. dec1, dec2, etc.) for reconstructing the independent concepts, i.e. for reconstructing a description of the determined common concepts for each mode type, so that these descriptions can be used to identify data items of a particular mode type that match a concept. Thus, the inputting step may further comprise: inputting the common concept vector into at least one decomposition neural network comprising at least one decoder, wherein the or each decomposition neural network outputs, a pair of decoder vectors (v1', v2') representing the at least one concept common to both the first data item and second data item.

The decomposition stage and the modality embedding stage may be trained together, such that when vectors v1, v2 produced by the modality embedding stage are passed through the decomposition stage and the decoder vectors v1', v2' are generated, the set of training conditions must be satisfied. The set of training conditions may comprise four conditions that must be satisfied.

Training the machine learning model to satisfy a set of training conditions may comprise training the neural networks such that, for each pair of encoder vectors (v1, v2) and corresponding pair of decoder vectors (v1', v2') : the encoder vector (v1) for the first data item is similar to the decoder vector (v1') for the first data item, and the encoder vector (v2) for the second data item is similar to the decoder vector (v2') for the second data item. In other words, the training conditions may specify an auto-encoding cosine loss condition.

Training the machine learning model to satisfy a set of training conditions may comprise training the neural networks such that, for each pair of encoder vectors (v1, v2) and a corresponding pair of decoder vectors (v1', v2') : the encoder vector (v1) for the first data item is similar to the decoder vector (v2') for the second data item, and the encoder vector (v2) for the second data item is similar to the decoder vector (v1') for the first data item. In other words, the training conditions may specify a cross-modal cosine loss condition.

The training conditions may specify that the determined common concept vector z (representing at least one concept common to both the first data item and second data item) has dimensions or concepts which are as independent as possible from each other. In other words, the training conditions may specify a total correlation loss condition.

The training conditions may specify that the encoder vectors for similar data items of the same mode type are similar. That is, two similar text recipes, or two similar images, should have similar encoder vectors. In other words, the training conditions may specify a smooth Jacobian loss condition.

The model may be trained until convergence.

The model has been tested on both controlled datasets (with ground-truth concepts fully or partially available for quantitative comparison), and with the large scale Recipe1M dataset for food image to recipe retrieval (see e.g. "Recipe1 M+: A Dataset for Learning Cross-Modal Embeddings for Cooking Recipes and Food Images", Marin et al, IEEE Trans. Pattern Anal. Mach. Intell. (2019)). The term "factor" is used interchangeably herein with the term "concept". Specifically, the model was tests on four datasets:
(i) Synth - the synthetic data generated from a devised neural network model with disentangled latent variables partitioned into shared and private factors;
(ii) Sprites - the 2D binary images of sprites of two different shapes (square and oval) as modality, where the locations and size of the sprite are considered shared factors;
(iii) Split-MNIST - bi-modal data created from the MNIST dataset by splitting images into left (modality-1) and right (modality-2) halves; and
(iv) Recipe1M - the large scale food dataset that consists of pairs of food image and recipe text including title, ingredient list and instructions.

Thus, the present techniques can be used for different applications, not just for food recipe retrieval.

The present techniques could be used in a variety of settings. Any electronic device that is able to acquire, store and/or send data items (e.g. text, images, video) to be processed by the machine learning model can be used to implement some or all of the present techniques. For example, a smartphone with a camera may be used to take photos of meals, or send a pre-recorded/pre-captured image from a user's photo gallery to be processed. Images could also be obtained from social media, the internet or as screen grabs/frames from videos. A smart television could be used to select an image from an application source or from a video displayed/played on the television. This may enable a user to request a recipe for the food item show in the captured image or video on the television, for example. Similarly, a home appliance that has access to images of food, via the internet, an in-built camera, or otherwise, could be used to implement the present techniques.

A user may use the present techniques to find out how to cook a food item or meal they have seen in an image. They may need to find the ingredients and instructions. Additionally, or alternatively, the user may want to know the nutritional content of the food item in the image. The user may want to build their own nutritional or food-likeness profile, which can be used for personalised recommendations and retrieval. To achieve this, a third party database may be coded using the machine learning model, to compute the encoder vectors and list of concepts z for every entry/data item in the database. Once the database has been coded, it can be used to provide responses to search queries, as described above (i.e. to provide at least one data item in response to a search query). Additionally or alternatively, a user's own gallery of images and/or collection of recipes could be coded in the same way, and then used to provide responses to search queries. Additionally or alternatively, the user could be asked a set of questions before they use the system for the first time in order to build a profile specifically for the user, in combination with information automatically extracted from the user's own gallery of images.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

## Claims

1. A computer-implemented method for concept matching using a machine learning model, the method comprising:
receiving, from a user, a search query comprising at least one criterion that represents at least one concept;
inputting the received at least one criterion into at least one neural network for processing the search query; and
outputting at least one result in response to the user search query.

2. The method as claimed in claim 1 wherein the at least one criterion comprises at least one concept, and wherein the method further comprises:
retrieving, from storage, at least one data item which matches the at least one concept;
wherein outputting at least one result comprises outputting the at least one retrieved data item in response to the user search query.

3. The method as claimed in claim 1 wherein the at least one criterion comprises at least one data item, and wherein the method further comprises:
determining, using the at least one neural network, at least one concept represented by the at least one criterion.

4. The method as claimed in claim 3 wherein outputting at least one result comprises:
outputting a list comprising the determined at least one concept and an importance value corresponding to each concept, in response to the user search query.

5. The method as claimed in claim 4 further comprising:
receiving information from the user specifying that one or more concepts in the list is incorrect; and
transmitting the received information to an external server for retraining the at least one neural network.

6. The method as claimed in claim 3 or 4 further comprising:
retrieving, from storage, at least one data item which matches the determined at least one concept;
wherein outputting at least one result comprises outputting the at least one retrieved data item in response to the user search query.

7. The method as claimed in claim 4 or 6 further comprising:
receiving a user input modifying an importance value of at least one predicted concept in the outputted list;
wherein the retrieving comprises:
retrieving, from storage, at least one data item which matches the determined at least one concept as modified by the received user input.

8. The method as claimed in claim 7 further comprising:
storing each user modified importance value for a predicted concept for personalising responses to subsequent queries received from the same user.

9. The method as claimed in any of claims 2 and 6 to 8 wherein the received user search query specifies a type of data item to be provided in response to the query, and wherein the outputting comprises:
outputting at least one retrieved data item of the specified type in response to the user search query.

10. An electronic device comprising:
a user interface for receiving, from a user, a search query comprising at least one criterion that represents at least one concept; and
at least one processor, coupled to memory, arranged to:
input the received at least one criterion into at least one neural network for processing the search query; and
output at least one result in response to the user search query.

11. A computer-implemented method for training a machine learning model to perform concept matching, the method comprising:
obtaining a training data set comprising a plurality of pairs of data items, each pair of data items comprising a first data item of a first mode type and a second data item of a second mode type, where the first data item and the second data item have at least one concept in common;
inputting each pair of data items into at least one neural network to determine at least one concept represented by both the first data item and the second data item; and
training the at least one neural network to satisfy a set of training conditions.

12. The method as claimed in claim 11 wherein inputting comprises:
inputting each pair of data items into at least one modality embedding neural network comprising at least one encoder, wherein the at least one modality embedding neural network outputs, for each pair, a pair of encoder vectors representing the first data item and second data item;
inputting each pair of encoder vectors into at least one inference network to determine a common concept vector representing at least one concept common to both the first data item and second data item; and
inputting the common concept vector into a decomposition neural network comprising at least one decoder, wherein the decomposition neural network outputs, a pair of decoder vectors representing the at least one concept common to both the first data item and second data item.

13. The method as claimed in claim 12 wherein training to satisfy a set of training conditions comprises training the neural networks such that, for each pair of encoder vectors and corresponding pair of decoder vectors:
the encoder vector for the first data item is similar to the decoder vector for the first data item, and
the encoder vector for the second data item is similar to the decoder vector for the second data item.

14. The method as claimed in claim 12 or 13 wherein training to satisfy a set of training conditions comprises training the neural networks such that, for each pair of encoder vectors and a corresponding pair of decoder vectors:
the encoder vector for the first data item is similar to the decoder vector for the second data item, and
the encoder vector for the second data item is similar to the decoder vector for the first data item.

15. A non-transitory data carrier carrying code which, when implemented on a processor, causes the processor to carry out the method of any of claims 1 to 9 and 10 to 14.
